Europäisches Patentamt

(19) European Patent Office

Office européen des brevets

(11) Publication number: **0 149 335**
A2

## (12) EUROPEAN PATENT APPLICATION

(21) Application number: 84308669.5

(22) Date of filing: 13.12.84

(51) Int. Cl.⁴: **B 29 C 47/20**
B 29 D 7/00, B 29 C 47/86
//B29L7/00

(30) Priority: 30.12.83 GB 8334613

(43) Date of publication of application:
24.07.85 Bulletin 85/30

(84) Designated Contracting States:
BE CH DE FR GB IT LI NL SE

(71) Applicant: BP Chemicals Limited
Belgrave House 76 Buckingham Palace Road
London, SW1W 0SU(GB)

(72) Inventor: Torkington, John Alexander BP Chemicals
Limited
Salt End
Hedon Hull HU12 8DS(GB)

(74) Representative: Krishnan, Suryanarayana
Kalyana et al,
BP INTERNATIONAL LIMITED Patents Division Chertsey
Road.
Sunbury-on-Thames Middlesex TW16 7LN(GB)

(54) Apparatus and method for extruding polymer melts.

(57) This invention relates to an apparatus and a method for
extruding polymer melts, especially to produce blown films
of reduced surface damage caused by melt-fracture. The
apparatus is an extrusion die which has a means for heating
the die lips provided on or embedded into the face thereof.
The extrusion die of this invention may be used for extrusion
of melts of polyolefins, polyesters, polystyrene, polyamides,
polyvinyl chloride and polyvinylidene chloride.

1

APPARATUS AND METHOD FOR EXTRUDING POLYMER MELTS

The present invention relates to an apparatus and a method for extruding polymer melts, especially to produce blown films of reduced surface damage caused by melt-fracture.

Blown films of 5-200 microns thickness (gauge) are in great demand in the plastics industry. Such films are produced by extrusion of a tube of the polymer which is subsequently inflated into a bubble and finally cooled e.g. by a stream of cold air. Generally, it is necessary not only for the bubble to be stable during the extrusion/inflation stages but also for the blown film to have a good surface quality. The stability of the bubble tends to reduce as the bulk temperature of the polymer melt forming the bubble increases. For instance, a very hot film is less resistant to applied stress and tends to deform in an unstable manner. One source of these stresses can be the fast moving cooling air referred to above. The surface quality or finish of the blown films depends to a large extent on elastic and viscous stresses induced at the die exit. The main source of elastic stress is the rapid acceleration of the surface layers of the melt as it leaves the die. The viscous stresses are a function of the shear rate in the melt adjacent to the die wall at the die exit. The combined stresses can be high enough to overcome the tensile strength of the film and therefore to cause rupture or surface damage. One example of surface damage and roughness caused by these stresses is the so called "sharkskin" melt fracture which is believed to occur when a critical stress is exceeded as the melt exits from the die. Surface damage of this type can lead to deterioration in the optical properties by decreasing clarity and gloss, and increasing haze. This is especially the case with thermoplastic resins of high weight average molecular weight and narrow molecular weight distribution as exhibited by many commercial linear low density polyethylene (LLDPE) film grades.

The surface stresses can be reduced by increasing the die gap. However, this results in a thicker film leaving the die which takes longer to cool. In addition, in the case of polymers such as LLDPE, the polymer has a low melt strength which prevents the use of high velocity cooling air to reduce cooling time and therefore reduces throughput rates. Moreover, to achieve a given film thickness at a given blow ratio, the melt draw ratio has to be increased and this may lead to the bubble breaking or to a film exhibiting unbalanced mechanical properties.

It is an object of the present invention to provide apparatus capable of producing an extrudate having improved surface finish.

Accordingly, the present invention in one aspect is an extrusion die for producing extrudates from polymer melts, said extrusion die comprising a die body and die lips through which the extrudate exits characterised in that means for heating the die lips is provided on or embedded into the face of the die.

A second aspect of the present invention provides an extrusion die for producing extrudates from polymer melts, said extrusion die comprising a die body and die lips through which the extrudate exits characterised in that means for heating a zone of the die lips is provided on or embedded into the face of the die, the heated lip zone being insulated from the die body.

A third aspect of the present invention provides an extrusion die for producing extrudates from polymer melts, said extrusion die comprising a die body and die lips through which the extrudate exits characterised in that means is provided on or embedded in the face of the die for heating a zone of the die lips the heated zone extending from the die lip exit to a depth not greater than about 1 cm into the die, preferably to a depth not greater than about 0.5 cm therein, the heated lip zone being insulated from the die body.

The extrusion die of the present invention is provided with the defined means for heating a zone of the die lips, said means being on or being embedded in the face of the die. The die body and/or lips can be provided with conventional heating means, for example, peripheral ring heaters which are additional to the defined means to heat a zone of the die lips employed in the present invention. In the case of an annular die used for manufacturing pipe or blown film, the mandrel can contain conventional heating means in the core thereof and/or heating means on or embedded in the face of the mandrel in accordance with the present invention.

The present invention further provides a process for extruding thermoplastic polymer using the extrusion die in accordance with the present invention characterised in that the temperature of the die lips at the edge where the polymer emerges from the die is maintained at a temperature at least 10°C (hereinafter referred to as the temperature differential) above the temperature of the die land at a depth of 1.5 cm into the die. Preferably the temperature differential is at least 20°C, most preferably at least 25°C.

In the extrusion die of the present invention it is to be understood that the term "die lips" as used in relation to the manufacture of hollow extrudates, e.g. tubing or blown film, embraces either the outer die lips (which shape the exterior of the hollow extrudate) or the inner die lips, or both the outer and inner lips together.

The extrusion die of the present invention may be used for extruding polymer melts into any shape, especially into pipes, tubes, rods, blown films and sheet. For example, the die can be of the type used for making slot cast sheet or film or can be an annular die of the type used in making pipe or blown-film or can be of the type used in making conventional extruded sections, e.g. strip, rod or channel sections.

In the present invention the extrusion die has means for heating the die lips situated on or embedded into the face of the die. The means for heating enables the die lip temperature to be raised to a level substantially above the bulk temperature of the polymer melt within the die body. In the case of tubular dies according to the present invention it is preferred to heat both the inner and outer die lips. This has the effect of increasing the temperature of the melt, and especially the surface of the melt, as it leaves the die exit. This has the effect of reducing or eliminating melt fracture and thus giving the extrudate an improved surface finish. In the extrusion of blown film the bulk temperature of the polymer melt is preferably kept within optimum levels to maintain bubble stability.

Moreover, placing the heating means on or embedding the heating means into the face of the die in accordance with the present invention enables a greater degree of control over the heating of the die lips than if these means are placed peripherally around the body of the die surrounding the lips (hereinafter referred to as "peripheral heating") in accordance with conventional prior art techniques. Advantages obtainable by using the extrusion die of the present invention, compared with conventional dies having peripheral heating only, are as follows:

(a)   in the present invention the heating means can be situated close to the die lip zone compared with the distances involved in the prior art "peripheral heating" techniques. This leads to improved temperature control of the lips and the facility to more rapidly adjust the lip temperature;

(b)   the heating means in the present invention can be disposed over a relatively large area (e.g. substantially the whole face of the die) and this can provide more uniform heating and better temperature control than hitherto obtainable using peripheral heating only. Furthermore, in the case that the heating means is provided by electric resistance heaters, it is preferred to use such heaters having a relatively large surface area as smaller heaters are difficult to manufacture and frequently provide unsatisfactory performance in practice.

The extrusion die of the present invention can be fabricated as a purpose built die or can be an existing die modified in accordance with the invention.

For example an existing die can be modified in accordance with the present invention by fitting an electric heater or an oil-heated heat exchanger to the die face. Such modification is desirable to save cost or where it is desired to benefit from the advantages of the invention without substantially altering other design or operational parameters of an existing extrusion process.

The heating means used may be any of the conventional types for example, electric resistive heating or hot oil heating.

The heating means is preferably disposed on the face of the die such that it is marginally spaced from the actual die exit. This is to ensure that the extrudate does not come into direct contact with the heating means. The heating means can be provided with an outer insulating layer.

In a preferred embodiment of the present invention the defined heating means heats a zone of the die lips substantially not more than 1 cm in depth into the die body, preferably less than 0.5 cm in depth. Preferably this defined heated zone of the die lips is maintained during extrusion at a higher temperature than the main body of the die. The significance of keeping the heated zone in the die lip relatively small is to reduce super-heating the bulk of the polymer melt and to heat preferentially the surface of the melt. If the zone is relatively long then there is a risk that the bulk melt temperature may rise to the extent that bubble instability occurs.

To reduce conduction of heat from the super-heated die lip zone into the main body of the die it is preferred to thermally insulate the die lip zone from the die body, or to reduce the area of metal/metal contact between the die lips and the die body. In the case that the die lips and die body are integrally formed, the area of metal connecting the defined lip zone to the die body is preferably small in relation to the cross sectional area of the die body so that thermal conduction from the lip zone to the die body is maintained at a relatively low level compared with conventional dies. Preferably the said area of metal/metal contact, or the area

of metal connecting the lip zone to the die body as the case may be, is less than 50%, more preferably less than 20%, most preferably less than 10% of the cross sectional area of the die body in the plane perpendicular to the flow path of the polymer melt.

For the avoidance of doubt in the case that the said cross sectional area of the die body varies along its length, the defined cross sectional area of the die body is to be taken to mean the relevant area at its maximum cross section. The insulation can be achieved using conventional means e.g. an air gap, a glass fibre mat, PTFE sheet or the like. Such insulation may, for example, span the full cross section of the die body (with a suitable gap in the land region to allow passage of the polymer melt) so that the heated lip zone is thermally insulated from the die body, or may extend to insulate an area less than the full cross section. Further insulation can be spread or laid over the heaters and the whole unit bolted together on the face of the die.

The temperature of the heated lip zone will depend upon the nature of the polymer melt being extruded, the bulk temperature of the melt and the thickness of the extrudate e.g. a tube, a pipe or a blown film. For instance in the case of extruding LLDPE into blown films, the temperature of the heated zone is suitably at least 20°C, preferably at least 40°C and most preferably at least 60°C above the bulk melt temperature at the die exit.

The extrusion die of the present invention may be used for extruding polymer melts of e.g. polyolefins, polyesters, polystyrene, polyamides, polyvinyl chloride and polyvinylidene chloride.

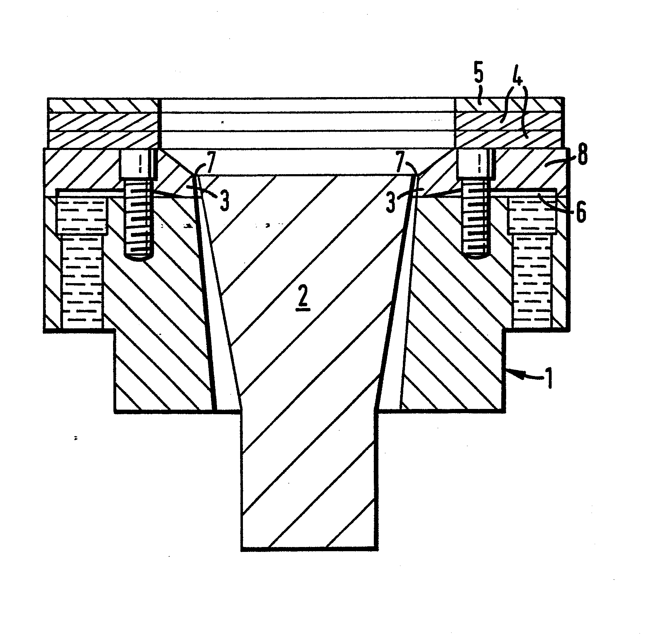

The extrusion die of the present invention is further illustrated with reference to the accompanying drawing which is a sectional view of a BETOL extruder die modified with a die face heater.

In the drawing, a die body (1) has a central mandrel (2) and die lips (3) which are heated by disc shaped heaters (4) situated on the face of the die. The heaters are provided with insulation (5). The die body also has an insulating air gap (6) and a polymer melt (not shown) is extruded through the annular die exit (7). The disc shaped heaters (4) are spaced from the die exit (7) to avoid any contact between the heaters (4) and the extrudate emerging from die exit (7). The heaters (4) in use provide a super-heated die lip section (8) which super-heats the external surface of the tube of polymer extrudate and reduces or eliminates any tendency to melt fracture at this surface.

The degree of super-heating is preferably maintained below the level at which bubble instability occurs. It is preferred additionally to super-heat the inner (mandrel) die lip using a ring heater not shown on the face of the mandrel.

The following Examples illustrate the use of the extrusion die of the present invention for producing blown films from LLDPE.

Examples

Two flat 200 watt disc-shaped heaters were fitted to the face of an annular film die in accordance with the present invention and in a manner similar to that shown in the drawing. Glass fibre insulation was spread over the heaters and the whole system was bolted together. The super-heated lip section was 5 mm in depth. The central mandrel was raised by 5 mm (using spacers at the base) to align the inner die lip with the new height of the external lip.

The polymer extruded was LLDPE powder grade LL101AA (ex BP Chemicals) of melt index 0.8.

The experimental runs were split into two main groups and the details are recorded in the Table below. In runs (A) - (E) only the lip temperature was deliberately varied and in (F) - (J) the 3 die zone temperatures were varied in unison. Starting from the hopper of the extruder and proceeding along the material flow path, the first, second and third barrel temperature control zones are called B1, B2 and B3 respectively and they are followed by the two main die temperature control zones D1 and D2 in that order, and finally the temperature control zone for the lips.

Runs A - E

The 2 main die zones (namely D1 and D2) were set at 200°C and the lip temperature was steadily raised from 200 to 270°C, the maximum attainable temperature. Temperature overriding in die zone 2 about 1.5 cm in from the die exit was 32°C in run E. Clarity, assessed by visual inspection, improved considerably as the lip temperature was raised and true sharkskin, which initially was high, virtually disappeared. There was some reduction in bubble stability, probably caused mainly by the temperature overriding in zone 2.

Runs F - J

All the die zones were set at the same temperature and the die as a whole was raised in steps from 200-260°C. The bubble developed instability and was lost at 260°C.

The film from run I (die at 250°C) was of approximately the same clarity and sharkskin level as that of run E (lips at 270°C).

It will be appreciated from the Table that the temperature differential (as hereinbefore defined) in Runs B-E is at least 10°C and that these Runs are also in accordance with the process embodiment of the present invention.

Bulk Melt Temperatures

The conditions of runs E and I were repeated and the melt temperature at the die exit was carefully recorded using a Comark temperature probe. The temperature corresponding to run E was 236°C, 11° cooler than that of run I, showing the advantage of limiting the depth of the super-heated zone.

0149335

## TABLE

## FILM EXTRUSION CONDITIONS

Materials        : LL101AA powder (16029C) + antioxidant
Screw            : Continuous taper, Nominal diameter 25 mm, L/D = 20
Die              : 2"diameter and hot lip extension
Screw Speed      : 50 rpm
Haul-off Speed   : 7 m/min

| RUN | SET TEMPERATURE PROFILE (°C) RECORDED | | | | | | MOTOR AMPS | OUTPUT (kg/hr) | BUR* | COMMENTS |
|-----|-----|-----|-----|-----|-----|-----|-----|-----|-----|-----|
|     | B1 | B2 | B3 | D1 | D2 | LIPS | | | | |
| A | 180 162 | 200 199 | 200 212 | 200 206 | 200 207 | 200 202 | 7.3 | 4.08 | 1.63 | Increasing clarity |
| B | 180 162 | 200 200 | 200 212 | 200 202 | 200 210 | 200 220 | 7.2 | 3.9 | 1.63 | |
| C | 180 162 | 200 200 | 200 212 | 200 206 | 200 208 | 240 239 | 7.2 | 4.2 | 1.75 | |
| D | 180 166 | 200 199 | 200 212 | 200 206 | 200 228 | 260 259 | 7.3 | 4.32 | 1.75 | |
| E | 180 166 | 200 200 | 200 212 | 200 208 | 200 232 | 280 270 | 7.0 | 4.32 | 2.0 | Bulk Temp 236°C |
| F | 180 162 | 200 200 | 200 210 | 200 202 | 200 208 | 200 206 | 7.2 | 4.26 | 1.75 | Repeat of (A) |
| G | 180 168 | 200 200 | 200 210 | 230 234 | 230 236 | 230 230 | 7.1 | 4.20 | 1.63 | Increasing clarity |
| H | 180 170 | 200 200 | 200 212 | 240 242 | 240 244 | 240 240 | 7.0 | 4.20 | 1.63 | |
| I | 180 166 | 200 200 | 200 212 | 250 249 | 250 253 | 250 250 | 7.1 | 4.20 | 1.63 | Bulk Temp 247°C |
| J | 180 170 | 200 200 | 200 211 | 260 254 | 260 262 | 260 260 | 7.0 | 4.20 | - | Bubble lost |

*BUR is the blow up ratio

Claims:

1. An extrusion die for producing extrudates from polymer melts, said extrusion die comprising a die body and die lips through which the extrudate exits, characterised in that means for heating the die lips is provided on or embedded into the fact of the die.

2. An extrusion die according to claim 1 wherein the means for heating the die lips is capable of heating a zone of the die lips, the heated lip zone being insulated from the die body.

3. An extrusion die according to claim 2 wherein the heated die lip zone extends from the die lip exit to a depth not greater than about 1 cm into the die.

4. An extrusion die according to claim 2 or 3 wherein the heated die lip zone extends from the die lip exit to a depth not greater than 0.5 cm into the die.

5. An extrusion die according to any one of the preceding claims wherein the means for heating the die lips is a peripheral ring heater.

6. An extrusion die according to any one of the preceding claims 1 to 4 wherein the die is an annular die for manufacturing pipe or blown film comprising a mandrel having a face and a core and the heating means is provided on or embedded into the face of the mandrel or provided in the core of the mandrel.

7. An extrusion die according to any one of the preceding claims wherein the die lips and die body are integrally formed, characterised in that the area of metal/metal contact between the heated die lips and die body is less than 50% of the cross sectional area of the die body at its maximum cross section in a plane perpendicular to the flow path of the polymer melt.

10

8. A process for extruding thermoplastic polymer using an extrusion die comprising die body and die lips spaced by a die land characterised in that the temperature of the die lips is maintained at least 10°C above the temperature of the die land at a depth of 1.5 cm into the die.

9. A process according to claim 8 wherein the thermoplastic polymer is selected from polyolefins, polyesters, polystyrene, polyamides, polyvinyl chloride and polyvinylidene chloride.

10. A process according to claim 8 or 9 whenever used to produce blown films from linear low density polyethylene.